# EUROPEAN PATENT APPLICATION

(11) **EP 3 358 540 A1**
(43) Date of publication of application: **08.08.2018**
(21) Application number: 18151363.1
(22) Date of filing: 12.01.2018
(51) Int. Cl.: G07G 1/00, G07G 1/14, G06Q 10/08

(54) **OBJECT RECOGNITION SYSTEM**

(30) Priority: 07.02.2017 JP 2017020434
(71) Applicant: Toshiba TEC Kabushiki Kaisha, Tokyo 141-8562 (JP)
(72) Inventor: Miyakoshi, Hidehiko, Tokyo, 141-8562 (JP)
(74) Representative: Hoffmann Eitle

(57) **Abstract**

An object recognition system according to an embodiment includes a server and at least one point of sale device. A storage device stores a recognition dictionary that includes, for each of a plurality of articles, at least one feature value for identifying the corresponding article, and an effective period indicating a period during which the corresponding article is sold. The server acquires a present date, and for each of the plurality of articles sold in the store, determines whether the present date is included in the effective period. The server generates an effective recognition dictionary that includes the at least one feature value of each of the plurality of articles sold in the store for which the present date is included in the corresponding effective period. A communication device transmits, at a predetermined time, the effective recognition dictionary to the at least one point of sale device.

## Description

### CROSS-REFERENCE TO RELATED APPLICATION

This application is based upon and claims the benefit of priority from Japanese Patent Application No. 2017-020434, filed February 7, 2017, the entire contents of which are incorporated herein by reference.

### FIELD

Embodiments described herein relate generally to an object recognition system.

### BACKGROUND

When performing commodity registration during checkout, object recognition may be used to identify a commodity from an image obtained by imaging the commodity. However, vegetables and fruits distributed in the market sometimes have different appearances in each of the seasons. If the object recognition is performed on such seasonal commodities, recognition target commodities are manually replaced in each of the seasons in order to maintain high recognition performance.

However, work for manually replacing the recognition target commodities in each season is complicated and takes time for setting. Further, it is likely that the setting may be forgotten.

### SUMMARY OF THE INVENTION

One of the objects of the present invention is to improve prior art techniques and overcome at least some of the prior art problems as for instance above illustrated.

According to a first aspect of the present invention, it is provided a server for use in an object recognition system that includes the server and at least one point of sale device, the server comprising: a storage device that stores a recognition dictionary that includes, for each of a plurality of articles sold in a store, at least one feature value for identifying the corresponding article, and an effective period indicating a period during which the corresponding article is sold; a processor configured to:
acquire a present date,
for each of the plurality of articles sold in the store, determine whether the present date is included in the effective period of the corresponding article, and
generate an effective recognition dictionary that includes the at least one feature value of each of the plurality of articles sold in the store for which the present date is included in the corresponding effective period; and
a communication device controlled to transmit, at a predetermined time, the effective recognition dictionary to the at least one point of sale device.

According to a second aspect of the present invention, it is provided an object recognition method comprising:
storing a recognition dictionary that includes, for each of a plurality of articles sold in a store, at least one feature value for identifying the corresponding article, and an effective period indicating a period during which the corresponding article is sold;
acquiring a present date;
for each of the plurality of articles sold in the store, determining whether the present date is included in the effective period of the corresponding article;
storing an effective recognition dictionary that includes the at least one feature value of each of the plurality of articles sold in the store for which the present date is included in the corresponding effective period;
generating an image of an article; and
recognizing the article by comparing at least one feature value in the generated image to the at least one feature value of each of the plurality of articles stored in the effective recognition dictionary.

Optionally, in the second aspect, the effective periods included in the recognition dictionary overlap one another with respect to articles of a same group.

Optionally, the second aspect comprises transmitting, to at least one point of sale device, only portions of the effective recognition dictionary that were updated based on the present date, wherein the image is generated and the article is recognized by the at least one point of sale device.

According to a third aspect of the present invention, it is provided an object recognition system comprising:
a server including:
   a storage device that stores a recognition dictionary that includes, for each of a plurality of articles sold in a store, at least one feature value for identifying the corresponding article, and an effective period indicating a period during which the corresponding article is sold,
   a first processor configured to:
      acquire a present date,
      for each of the plurality of articles sold in the store, determine whether the present date is included in the effective period of the corresponding article, and
      generate an effective recognition dictionary that includes the at least one feature value of each of the plurality of articles sold in the store for which the present date is included in the corresponding effective period; and
   at least one point of sale device including:
      a communication device controlled to receive from the server at a predetermined time, the effective recognition dictionary,
      a camera configured to generating an image of an article, and
      a second processor configured to recognize the article by comparing at least one feature value in the generated image to the at least one feature value of each of the plurality of articles in the received effective recognition dictionary.

Optionally, in the third aspect, the effective periods included in the recognition dictionary overlap one another with respect to articles of a same group.

Optionally, in the third aspect, the storage unit stores the effective recognition dictionary, and the first processor generates the effective recognition dictionary by controlling the storage unit to update the effective recognition dictionary as needed based on the present date.

Optionally, in the third aspect, the at least one point of sale device includes a second storage device that stores the effective recognition dictionary,
the server transmits, and the communication device of the at least one point of sale device receives, only portions of the effective recognition dictionary that were updated based on the present date, and
the second processor controls the second storage device to update the stored effective recognition dictionary based on the received portions of the effective recognition dictionary that were updated.

### DESCRIPTION OF THE DRAWINGS

FIG. 1 is a perspective view of an article reading system according to an embodiment;
FIG. 2 is a block diagram showing an example of a hardware configuration of the article reading system;
FIG. 3 is a diagram showing an example of a data configuration of a PLU file;
FIG. 4 is a block diagram showing an example of a functional configuration of the article reading system;
FIGS. 5A and 5B are diagrams explaining a method of setting effective periods for commodities;
FIG. 6 is a diagram showing an example of effective and ineffective states of commodities in a specific period;
FIG. 7 a diagram showing an example of effective and ineffective states of commodities belonging to a specific group;
FIG. 8 is a flowchart for explaining a flow of processing performed by the article reading system during opening of a store; and
FIG. 9 is a flowchart for explaining a flow of processing performed by the article reading system during checkout of commodities purchased by a customer.

### DETAILED DESCRIPTION

Embodiments provide an object recognition system and a computer program capable of automatically updating a recognition dictionary.

An object recognition system according to an embodiment includes a server and at least one point of sale device. A storage device stores a recognition dictionary that includes, for each of a plurality of articles sold in a store, at least one feature value for identifying the corresponding article, and an effective period indicating a period during which the corresponding is sold. The server acquires a present date, and for each of the plurality of articles sold in the store, determines whether the present date is included in the effective period of the corresponding article. The server generates an effective recognition dictionary that includes the at least one feature value of each of the plurality of articles sold in the store for which the present date is included in the corresponding effective period. A communication device transmits, at a predetermined time, the effective recognition dictionary to the at least one point of sale device.

An object recognition system according to an embodiment is explained in detail below with reference to the accompanying drawings. Note that, in this embodiment, an example of the object recognition system is described as an article reading system 1 provided in a store such as a supermarket.

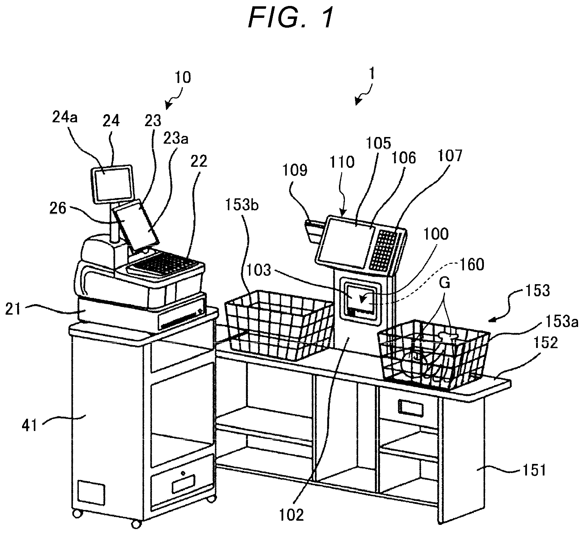

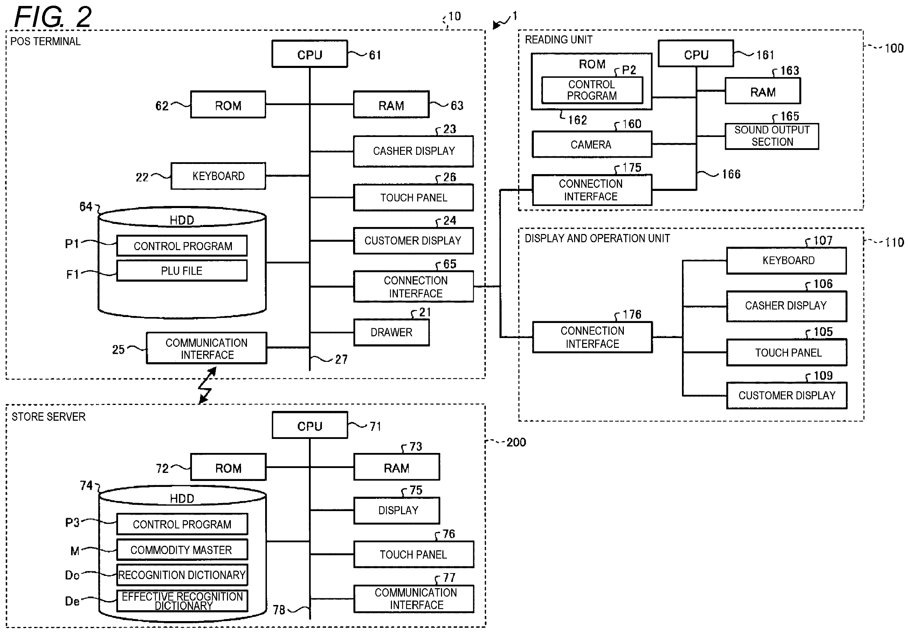

FIG. 1 is a perspective view showing an example of an article reading system 1. As shown in FIG. 1, the article reading system 1 includes a POS (Point-of-Sale) terminal 10, a reading unit 100, a display and operation unit 110, and a store server 200 (shown in FIG. 2).

The POS terminal 10 performs registration of an article G (a commodity) as a registration target. The POS terminal 10 identifies, on the basis of a feature value F of the article G output by the reading unit 100, a commodity read by the reading unit 100 and performs sales registration and settlement processing.

The reading unit 100 captures an image I(G) of the article G set as the registration target when the sale registration is performed and reads the feature value F of the image I(G) of the imaged article G.

The display and operation unit 110 displays the image I (G) of the article G captured by the reading unit 100 and displays various kinds of information output by the POS terminal 10. The display and operation unit 110 transfers information regarding various kinds of operation performed by a casher to the POS terminal 10.

The store server 200 is an example of an information processing system and is set in an office or the like of the store. The store server 200 is connected to the POS terminal 10 by communication means such as a wireless LAN or a wired LAN. The store server 200 aggregates and manages results of the sales registration and the settlement processing performed by the POS terminal 10. The store server 200 stores and maintains an effective recognition dictionary De for identifying the article G shown in the image I(G) of the article G imaged by the reading unit 100 and distributes the effective recognition dictionary De to the POS terminal 10. Note that a plurality of POS terminals 10 are provided in the store. The store server 200 is connected to all of the POS terminals 10.

In FIG. 1, the POS terminal 10 is provided on a register table 41 while being placed on a drawer 21. The POS terminal 10 includes, on the upper surface thereof, a keyboard 22 on which operation keys are arrayed. The POS terminal 10 includes, above the keyboard 22, a casher display 23 used by the casher to input information necessary for confirmation of registration information and settlement and a customer display 24 used by a customer to confirm the registration information. The casher display 23 includes a display panel 23a such as a liquid crystal panel. The display panel 23a is overlaid with a touch panel 26 to serve as a touch screen input device. The customer display 24 includes a display panel 24a such as a liquid crystal panel. The customer display 24 is positioned in an upper part of the POS terminal 10 to be capable of rotating in a direction to be easily seen by the customer. The drawer 21 stores bills, coins, and the like. The drawer 21 is opened according to an instruction from the POS terminal 10.

An article table 151 disposed in an L shape together with the register table 41 is provided next to the register table 41. A loading surface 152 for placing a shopping basket 153 and the like is formed on the upper surface of the article table 151. FIG. 1 shows an example in which the shopping basket 153 includes a first shopping basket 153a and a second shopping basket 153b. The first shopping basket 153a is a shopping basket carried in by the customer, that is, a shopping basket in which articles G before reading are put. The second shopping basket 153b is a shopping basket for storing the articles G for which the reading is finished. The casher picks up the article G before the reading from the first shopping basket 153a, causes the article reading system 1 to read the article G, and thereafter transfers the article G to the second shopping basket 153b. Note that the shopping basket 153 is not limited to a basket shape and may have a tray shape, a box shape, a bag shape, or the like.

The reading unit 100 is provided in the center of the loading surface 152 of the article table 151 and connected to the POS terminal 10 to transmit and receive data by wire or radio. The reading unit 100 is provided on the surface of a housing 102 and on the inner side of a reading window 103 facing to the casher side. The reading window 103 is formed by, for example, a light-transmissive glass plate such as a transparent glass plate. The reading unit 100 includes, in the inner part of the reading window 103, a camera 160 for imaging the article G. When the article G is imaged by the camera 160, the reading unit 100 outputs the image I(G) of the imaged article G and the feature value F of the article G calculated from the image I(G) to the POS terminal 10.

The display and operation unit 110 is provided above the housing 102. The display and operation unit 110 includes a casher display 106 such as a liquid crystal panel. The display and operation unit 110 is used by the casher when confirming an image captured by the reading unit 100 and inputting information necessary for operation of the article reading system 1. A touch panel 105 is overlaid on a screen of the casher display 106 to make it possible to input, with touch input, information necessary for operating the article reading system 1. Further, a keyboard 107 is provided on the right side of the casher display 106 to enable a keyboard input by the casher. The display and operation unit 110 includes, on the back side (the customer side) of the reading window 103, a customer display 109 for the customer to confirm a reading result and the like of the article G.

A hardware configuration of the article reading system 1 is explained with reference to FIG. 2. FIG. 2 is a block diagram showing the hardware configuration of the article reading system 1. The article reading system 1 includes the POS terminal 10, the reading unit 100, the display and operation unit 110, and the store server 200.

The POS terminal 10 includes a CPU (Central Processing Unit) 61, a ROM (Read Only Memory) 62, a RAM (Random Access Memory) 63, a HDD (Hard Disk Drive) 64, a connection interface 65, the drawer 21, the keyboard 22, the casher display 23, the customer display 24, a communication interface 25, and the touch panel 26. The CPU 61, the ROM 62, the RAM 63, and the HDD 64 are connected by an internal bus 27. All of the drawer 21, the keyboard 22, the casher display 23, the customer display 24, the communication interface 25, the touch panel 26, the HDD 64, and the connection interface 65 are connected to the internal bus 27 via input and output circuits (not shown).

The CPU 61 is a processor that manages control of the entire POS terminal 10. The ROM 62 is a nonvolatile memory that stores a fixed program and the like. The RAM 63 is a volatile memory used by the CPU 61 as a work area and the like.

The HDD 64 is a storage device that stores various computer programs and various files. The various computer programs include a control program P1 for commodity sales data processing including processing for, for example, controlling the operation of the entire POS terminal 10 and identifying the article G and displaying, on a screen, information indicating a result of the identification of the article G. The various files are, for example, a PLU (Price Look Up) file F1 that is distributed from the store server 200 and stores, in association with commodity codes in a table format, names and prices of commodities and feature values and the like of commodities that can be identified by the object recognition. Further, a registration table for registering commodities, a sales table, and the like are stored in the HDD 64. That is, the POS terminal 10 has the configuration of a general computer in which the CPU 61 acts as a controller and reads out and executes the control program P1 and the like.

The control program P1 executed by the POS terminal 10 is provided from a computer-readable recording medium such as a CD-ROM, a flexible disk (FD), a CD-R, or a DVD (Digital Versatile Disc) as a file having an installable format or an executable format.

The control program P1 may be stored on a computer connected to a network such as the Internet and provided by being downloaded through the network. Further, the control program P1 may be provided or distributed through a network such as the Internet. The control program P1 may be incorporated in the ROM 62 in advance.

The communication interface 25 is, for example, a network card for performing data communication with the store server 200.

The connection interface 65 is an interface for performing communication with a connection interface 175 of the reading unit 100 and a connection interface 176 of the display and operation unit 110. The communication is performed via wired or wireless connection.

The reading unit 100 includes a CPU 161, a ROM 162, a RAM 163, the camera 160, a sound output section 165, and the connection interface 175. Further, the display and operation unit 110 includes the connection interface 176, the touch panel 105, the casher display 106, the keyboard 107, and the customer display 109.

The CPU 161, the ROM 162, and the RAM 163 are connected by an internal bus 166. The camera 160, the sound output section 165, and the connection interface 175 are each connected to the internal bus 166 via various input and output circuits (not shown). The touch panel 105, the casher display 106, the keyboard 107, and the customer display 109 are each connected to the connection interface 176 via various input and output circuits (not shown).

The CPU 161 is a processor that manages control of the entire reading unit 100. The ROM 162 is a nonvolatile memory that stores a control program P2 and the like of the reading unit 100. The control program P2 includes a program of, for example, processing for calculating the feature value F from the image I (G) of the imaged article G and outputting the calculated feature value F to the POS terminal 10. The RAM 163 is a volatile memory used by the CPU 161 as a work area and the like. That is, the reading unit 100 has a configuration of a general computer system in which the CPU 161 acts as a controller and reads out and executes the control program P2 and the like.

Note that the control program P2 executed by the reading unit 100 may be incorporated in the ROM 162 in advance or may be provided from a computer-readable recording medium such as a CD-ROM, a flexible disk, a CD-R, or a DVD as a file having an installable format or an executable format.

The control program P2 may be stored on a computer connected to a network such as the Internet and provided by being downloaded through the network. The control program P2 may be provided through a network such as the Internet.

The camera 160 includes a color image sensor such as a CCD (Charge Coupled Device) or a CMOS (Complementary Metal Oxide Semiconductor). The camera 160 receives an imaging start signal from the CPU 161 and starts imaging, converts light reflected from the article G held up over the reading window 103 (FIG. 1) into an electric signal at a predetermined frame rate (e.g., 30 fps), and sequentially outputs captured images I(G).

The sound output section 165 includes a reproduction circuit and a speaker for reproducing a reading sound ("beep"), a warning wound, and a voice set in advance. The sound output section 165 reproduces the reading sound, the warning sound, the voice, and the like according to a control signal transmitted from the CPU 161 and informs about a reading state and the like of the article G.

Further, the connection interface 175 is connected to the CPU 161. The connection interface 175 is connected to the connection interface 65 of the POS terminal 10 to perform data transmission and reception between the reading unit 100 and the POS terminal 10.

The connection interface 176 is connected to the connection interface 65 of the POS terminal 10 to perform data transmission and reception between the display and operation unit 110 and the POS terminal 10. The connection interface 176 is connected to the connection interface 175 to perform data transmission and reception between the display and operation unit 110 and the reading unit 100.

The store server 200 includes a CPU 71, a ROM 72, a RAM 73, a HDD 74, a display 75, a touch panel 76, and a communication interface 77.

The CPU 71, the ROM 72, the RAM 73, and the HDD 74 are connected by an internal bus 78. The display 75, the touch panel 76, and the communication interface 77 are each connected to the internal bus 78 via various input and output circuits (not shown).

The CPU 71 is a processor that manages control of the entire store server 200. The ROM 72 is a nonvolatile memory that stores a fixed program and the like. The RAM 73 is a volatile memory used by the CPU 71 as a work area and the like.

The HDD 74 is a storage device that stores various computer programs and various files. The various computer programs include a control program P3 for controlling the operation of the entire store server 200 and managing the effective recognition dictionary De for identifying the article G. The various files are a commodity master M, a recognition dictionary Do, the effective recognition dictionary De, and the like. The commodity master M is a master file in which information (commodity names, commodity codes, prices, and the like) of all commodities sold in the store is registered. The recognition dictionary Do is a file (a dictionary) that stores feature values F capable of identifying each of the commodities that can be identified by the object recognition. The effective recognition dictionary De is a recognition dictionary in which commodities currently sold in the store are registered among all the commodities that can be identified by the object recognition. In this way, the store server 200 has the configuration of a general computer system in which the CPU 71 acts as a controller and reads out and executes the control program P3 and the like.

The display 75 includes a liquid crystal panel and the like and displays various kinds of information concerning the store server 200.

The touch panel 76 is overlaid on the liquid crystal panel included in the display 75 and is used in performing input of information necessary for operation of the store server 200.

The communication interface 77 is, for example, a network card for performing data communication with the POS terminal 10. Note that, in the hardware configuration shown in FIG. 2, the store server 200 and the POS terminal 10 are wirelessly connected. However, the store server 200 and the POS terminal 10 may be connected by wired connection.

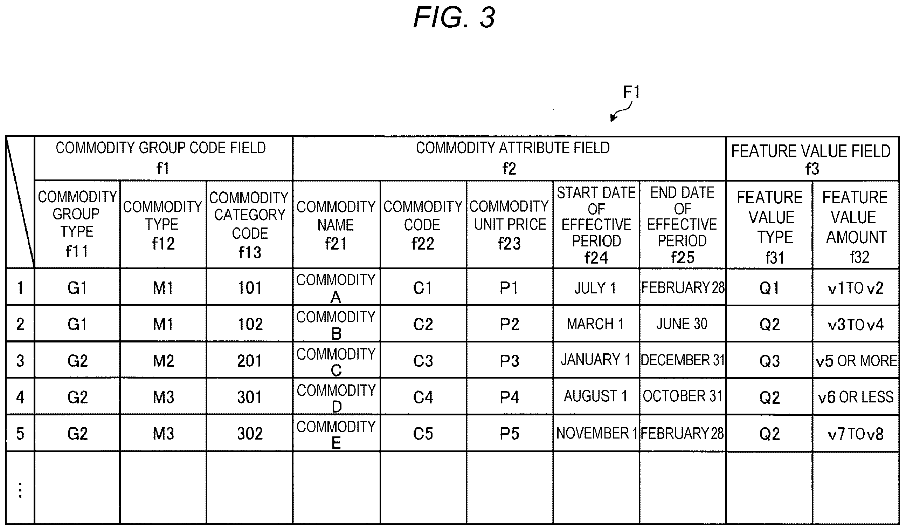

The PLU file F1 included in the POS terminal 10 is explained with reference to FIG. 3. The PLU file F1 stores commodity information used in performing the sales registration and the settlement processing. The PLU file F1 is used in identifying the article G shown in the image I (G) captured by the reading unit 100 (FIG. 2) . The PLU file F1 is generated on the basis of the commodity master M, the recognition dictionary Do, and the effective recognition dictionary De included in the store server 200. The generated PLU file F1 is transmitted to the POS terminal 10 at a predetermined timing and stored in the HDD 64 (FIG. 2) . Note that the predetermined timing is, for example, a timing of the store opening. When the store opens, it is desirable to transfer information necessary for updating the PLU file F1 to the POS terminal 10 if commodities displayed in the store have been changed.

FIG. 3 is a diagram showing an example of a data configuration of the PLU file F1. The PLU file F1 is a data file in which, for each of the articles G (the commodities) displayed in the store, commodity information of the article G and the feature value F for uniquely identifying the article G are stored. In the PLU file F1, information concerning the article G, for which sales registration can be performed in the POS terminal 10, is registered. Specifically, as shown in FIG. 3, the PLU file F1 includes a commodity group code field f1, a commodity attribute field f2, and a feature value field f3, and data corresponding to each of the fields.

The commodity group code field f1 stores various commodity group codes for identifying categories to which the article G belongs. FIG. 3 is an example in which, as an example of the commodity group codes, a commodity group type f11, a commodity type f12, and a commodity category code f13 are registered.

The commodity group type f11 represents commodity groups such as fruit and vegetable. The commodity type f12 represents commodity types such as apple and orange. The commodity category code f13 indicates that the article G is seasonally replaced, as will be described further below. For example, FIG. 3 indicates the sales periods in which a commodity A and a commodity B attached with the category codes f13 in the 100s are replaced. The same holds true concerning a commodity D and a commodity E.

Commodity attributes of the article G are stored in the commodity attribute field f2. The commodity attributes include, for example, a commodity name f21, a commodity code f22, a commodity unit price f23, an effective period start date f24, and an effective period end date f25. The commodity name f21 represents a name of the commodity. The commodity code f22 is a code such as a JAN code for uniquely identifying the commodity. The commodity unit price f23 represents a unit price of the commodity. The effective period start date f24 is information for identifying a start date of an effective period (a date) when the article G starts to be sold as a commodity. The effective period end date f25 is information for identifying an end date of the effective period when the sales of the article G ends.

In the feature value field f3, the feature value F calculated from the captured image I(G) of the article G is stored. Specifically, the feature value field f3 includes a feature value type f31 indicating a type of the feature value F and a feature value amount f32 indicating an amount or a range of the feature value F. The feature value type f31 is information obtained by quantifying a tint of the article G, a surface state (texture) such as unevenness of the surface of the article G, and the like calculated from the image I(G). A feature value corresponding to the article G is selected as appropriate. Note that, although not shown in FIG. 3, in some cases, the article G may be identified by a combination of multiple feature values F. In that case, the multiple feature values F are registered in the feature value field f3.

Note that the PLU file F1 configures a kind of a relational database (RDB). The kinds of information registered in the PLU file F1 are associated with one another. That is, information concerning one article G (commodity) is represented as a set of attributes. Therefore, it is possible to easily extract a set of the articles G having designated attributes from the PLU file F1. It is possible to extract, for example, a set of the articles G, the commodity group type f11 (vegetable), a set of the articles G, the effective period which includes December to February, and a set of the articles G which have an effective period including a specific date (for example, the current date). The set of the articles G having an effective period including a specific date is the effective recognition dictionary De explained above.

Note that, by adding registering information concerning an previously unregistered new article G to the PLU file F1, it is possible to expand types of the articles G set as recognition targets of the article reading system 1. By additionally registering a new feature value F of the article G already registered, it is possible to improve reading performance (recognition performance) of the article G of the article reading system 1. Operation of such additional registration is performed by respectively updating the commodity master M, the recognition dictionary Do, and the effective recognition dictionary De in the store server 200. Updated information is transmitted to the POS terminal 10 and reflected on the PLU file F1.

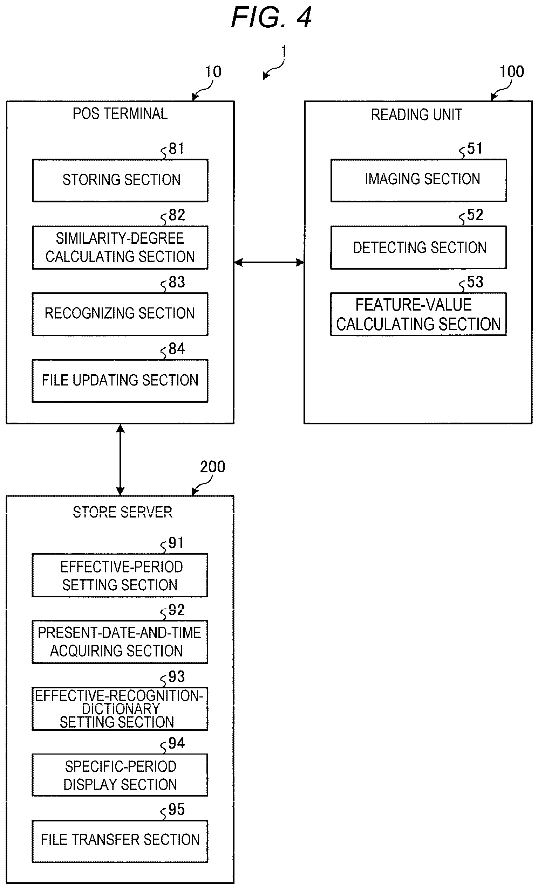

A functional configuration of the article reading system 1 is now explained in connection with FIG. 4. FIG. 4 is a block diagram showing an example of the functional configuration of the article reading system 1. Note that the block diagram of FIG. 4 shows only a characteristic function of the embodiment among all the functions of the article reading system 1, that is, a functional configuration for identifying the article G from the captured image I(G) of the article G. In the article reading system 1, the CPU 161 shown in FIG. 2 executes, as appropriate, the control program P2 stored in the ROM 162. Consequently, an imaging section 51, a detecting section 52, and a feature-value calculating section 53 are realized as functional sections of the reading unit 100.

Further, in the article reading system 1, the CPU 61 shown in FIG. 2 executes, as appropriate, the control program P1 stored in the HDD 64. Consequently, a storing section 81, a similarity-degree calculating section 82, a recognizing section 83, and a file updating section 84 are realized as functional sections of the POS terminal 10. In one embodiment, the CPU 61 is a processor that is programmed to carry out the functions of the storing section 81, the similarity-degree calculating section 82, the recognizing section 83, and the file updating section 84. In another embodiment, a hardware controller, e.g., an application specific integrated circuit (ASIC) or a field programmable gate array (FPGA), is configured to carry out the functions of the storing section 81, the similarity-degree calculating section 82, the recognizing section 83, and the file updating section 84.

In the article reading system 1, the CPU 71 shown in FIG. 2 executes, as appropriate, the control program P3 stored in the HDD 74. Consequently, an effective-period setting section 91, a present-date-and-time acquiring section 92, an effective-recognition-dictionary setting section 93, a specific-period display section 94, and a file transfer section 95 are realized as functional sections of the store server 200. In one embodiment, the CPU 71 is a processor that is programmed to carry out the functions of the effective-period setting section 91, the present-date-and-time acquiring section 92, the effective-recognition-dictionary setting section 93, the specific-period display section 94, and the file transfer section 95. In another embodiment, a hardware controller, e.g., an application specific integrated circuit (ASIC) or a field programmable gate array (FPGA), is configured to carry out the functions of the effective-period setting section 91, the present-date-and-time acquiring section 92, the effective-recognition-dictionary setting section 93, the specific-period display section 94, and the file transfer section 95.

A functional configuration of the reading unit 100 is explained below. The imaging section 51 outputs an imaging start signal to the camera 160 (FIG. 2) and causes the camera 160 to start an imaging operation. Thereafter, the imaging section 51 sequentially saves, in the RAM 163 (FIG. 2), the images I(G) captured and output by the camera 160.

The detecting section 52 detects, on the basis of a plurality of continuous images I(G) captured and output by the camera 160, that the article G is held up over the reading window 103 (FIG. 1). Specifically, the detecting section 52 reads out, from the RAM 163, the image I(G) output by the camera 160 and compares luminances of the image I (G) and the image I (G) read out immediately before. On condition that there is a change in a luminance gradation according to the comparison of the luminances, the detecting section 52 determines that the image I(G) is an image including some reflection of a hand, the article G, or the like. Further, the detecting section 52 binarizes the image I(G) from the image I (G) including the reflection and extracts a contour line of the article G. If there is a change in the position of the contour line in the continuous images I(G), the detecting section 52 identifies that a region inside the contour line is a region indicating the article G held over the reading window 103. In this way, the detecting section 52 detects that the article G is held over the reading window 103.

The feature-value calculating section 53 calculates a value of the feature value F of the article G from the region of the article G shown in the image I(G). Note that, at this point, a type of the article G shown in the image I(G) is unknown. Therefore, the feature-value calculating section 53 calculates a value of the feature value F registered in the PLU file F1. The feature-value calculating section 53 outputs the calculated amount of the feature value F to the POS terminal 10 via the connection interface 175 (FIG. 2).

A functional configuration of the POS terminal 10 is now explained.

The storing section 81 stores the PLU file F1.The similarity-degree calculating section 82 calculates a similarity degree C between the feature value F calculated from the image I (G) captured by the imaging section 51 and the feature value amount f32 of the articles G registered in the PLU file F1 stored by the storing section 81.

The recognizing section 83 selects a commodity having the similarity degree C equal to or larger than a predetermined threshold C1. The recognizing section 83 recognizes one of the articles G registered in the PLU file F1 as the imaged article G.

Note that the object recognition for recognizing the article G included in the image I(G) is also called generic object recognition as well. Various recognition techniques used in the generic object recognition are explained in detail in the following papers:
Keiji Yanai, "Present Situation and Future of Generic Object Recognition", Information Processing Society Proceeding, Vol. 48, No. SIG16 [searched on August 5, 2016], Internet <URL: http://mm.cs.uec.ac.jp/IPSJ-TCVIM-Yanai.pdf>
Jamie Shotton et al., "Semantic Texton Forests for Image Categorization and Segmentation", [searched on August 5, 2016], Internet <URL: http://mi.eng.cam.ac.uk/~cipolla/publications/inproceedings/20 08-CVPR-semantic-texton-forests.pdf>

Therefore, explanation of the recognition techniques is omitted.

The similarity degree C used by the recognizing section 83 in performing the object recognition and identifying the article G is a scale indicating to which degree the value of the feature value F of the article G shown in the image I(G) and the feature value amounts f32 of the articles G registered in the PLU file F1 are similar. The similarity degree C only has to be calculated as, for example, an absolute evaluation value having a scale such that a complete match is represented by a similarity degree of 1.0.

The file updating section 84 updates contents of the PLU file F1 on the basis of information transferred from the store server 200.

A functional configuration of the store server 200 is explained. The effective-period setting section 91 is an example of the period setting section. The effective-period setting section 91 sets, with respect to the article G replaced according to the seasons or the like among the articles G sold in the store, the effective period start date f24 and the effective period end date f25 as explained above in connection with FIG. 3.

The present-date-and-time acquiring section 92 is an example of the acquiring section. The present-date-and-time acquiring section 92 reads time information from a timer (e.g., a Real Time Clock) included in the CPU 71 (FIG. 2) and acquires a present date and time.

The effective-recognition-dictionary setting section 93 is an example of the effective-recognition-dictionary setting section. The effective-recognition-dictionary setting section 93 sets the effective recognition dictionary De in which the articles G sold in the store at the present date and time acquired by the present-date-and-time acquiring section 92 from all the articles G that can be identified by the object recognition are registered. Specifically, the effective-recognition-dictionary setting section 93 sets, as the effective recognition dictionary De, on the basis of an effective period indicating a sales period of the article G or an ineffective period indicating a period other than the effective period registered in advance, the articles G including the present date in the effective period out of the recognition dictionary Do. Note that "the article G includes the present date in the effective period" is described as "the article G is in an effective state" for convenience. Also note that the effective state is determined by the present date compared to the effective period, and the present time (hours and minutes of the day) are not necessarily used, even if the present time is provided by the Real Time Clock, for example.

By comparing the present date and effective periods or ineffective periods of the articles G at a predetermined timing such as store opening time, the effective-recognition-dictionary setting section 93 confirms whether the present date is included in the effective period. Note that the effective period means a period between the effective period start date f24 and the effective period end date f25. The ineffective period means a period other than the effective period. The effective-recognition-dictionary setting section 93 updates the effective recognition dictionary De on condition that there is a difference between an effective state of the article G in the latest effective recognition dictionary De and an actual effective state of the article G at the present date.

The specific-period display section 94 is an example of the display section. The specific-period display section 94 displays, for a specific period range, the effective period or the ineffective period of the effective recognition dictionary De set by the effective-period setting section 91.

The file transfer section 95 transfers the commodity master M, the recognition dictionary Do, and the effective recognition dictionary De stored in the store server 200 to the POS terminal 10 when there is a change in the information. Note that the file transfer section 95 may transfer only the changed information to the POS terminal 10 or may transfer all information of the commodity master M, the recognition dictionary Do, and the effective recognition dictionary De to the POS terminal 10.

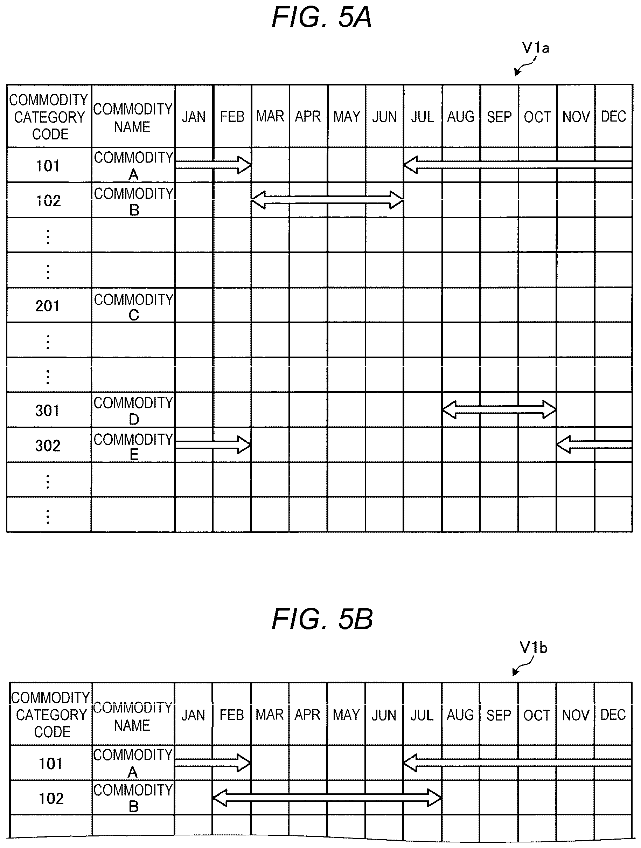

A method of setting an effective period and an ineffective period of the article G is now explained with reference to FIGS. 5A and 5B. FIGS. 5A and 5B are diagrams for explaining a method of setting an effective period of a commodity. Note that articles G such as vegetables and fruits distributed in the market are sometimes different in each of the seasons. An effective period in which the article G is sold in the store or an ineffective period in which the article G is not sold in the store is set for such seasonal commodities.

An operator of the store server 200 causes the effective-period setting section 91 to perform setting of effective periods or ineffective periods of the articles G. Specifically, first, the effective-period setting section 91 displays, on the display 75 (FIG. 2), as shown in FIG. 5A, a view V1a, which is a list of the articles G registered in the commodity master M. At that point, a schedule axis from January to December is drawn on the horizontal axis of the view V1a.

Subsequently, the operator of the store server 200 scrolls the list of the articles G up and down using the touch panel 76 and searches for a commodity having an effective period to be set. If the commodity having the effective period to be set, for example, the commodity A, is found, the operator designates an effective period start month and an effective period end month. Specifically, the operator of the store server 200 performs operation for touching the effective period start month and, thereafter, sliding a touching finger and releasing the touch in the effective period end month. According to the operation, the operator designates the effective period start month and the effective period end month. Note that, as shown in FIG. 5A, the schedule axis is cut between December and January. Therefore, if a period extending over two years is set, a period to December is set and, thereafter, period setting from January is performed again. Such processing may be performed using an existing tool such as a Gantt chart creation tool. The effective-period setting section 91 stores data of the created view V1a in the effective period start date f24 and the effective period end date f25 of the PLU file F1.

Note that, the example shown in FIG. 5A is an example in which the effective period is set. The ineffective period may be set in the same manner. The effective period start date and the effective period end date may be set by drawing the horizontal axis in units of one day.

If the effective period of the commodity is set, as shown in a view V1b in FIG. 5B, effective periods of commodities, to which the commodity category code f13 indicating occurrence of replacement in each of the seasons is given, may be set to overlap each other. That is, a replacement date of a seasonal commodity is not always a month beginning or a month end. Therefore, by providing an overlapping period as shown in the View V1b, in the overlapping period, a plurality of seasonal commodities may be registered in the effective recognition dictionary De. Therefore, even if the replacement date of the commodity fluctuates, it is possible to correctly recognize commodities displayed in the store.

### Explanation of action of the specific-period display section

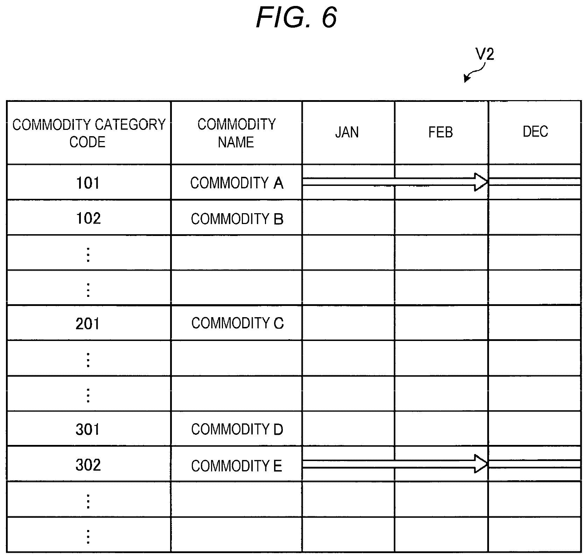

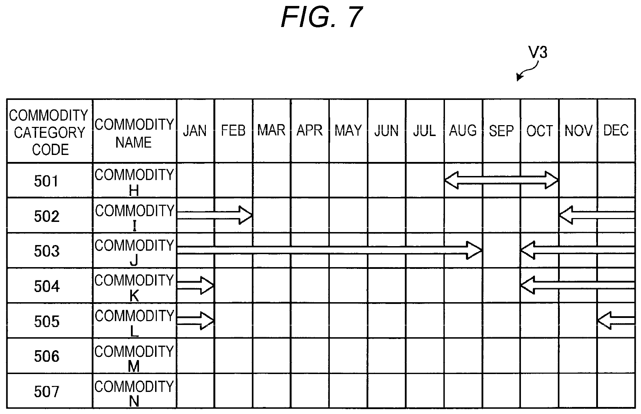

Operation of the specific-period display section 94 is explained with reference to FIGS. 6 and 7. FIG. 6 is a diagram showing a view V2, which is a list of effective and ineffective states of commodities in a specific period. As shown in FIG. 6, the specific-period display section 94 displays, on the display 75 (FIG. 2), an effective period or an ineffective period of the effective recognition dictionary De over a specific period range designated by the operator of the store server 200.

The specific-period display section 94 causes the display 75 of the store server 200 to display an operation menu (not-shown) . Thereafter, if the operator selects a specific period to display in the operation menu and sets a start month and an end month of the specific period, the specific-period display section 94 displays only the specific period as shown in the view V2. For example, only a range of December to February is extracted out of the view V1a (FIG. 5A) for display in view V2.

By displaying only the specific period in this way, the operator of the store server 200 can quickly confirm commodities displayed in the store in a necessary period range.

FIG. 7 is a diagram showing a view V3, which is a list of effective and ineffective states of commodities belonging to the specific commodity type f12 (FIG. 3).

The specific-period display section 94 causes the display 75 of the store server 200 to display an operation menu (not shown) . Thereafter, if the operator selects a specific commodity type in the operation menu and further designates a specific commodity type name, the specific-period display section 94 displays the list of effective and ineffective state of the commodities belonging to the specific commodity type f12 as shown in the view V3.

By displaying an effective period of only the commodity belonging to the selected commodity type f12 in this way, the operator of the store server 200 can quickly confirm the effective period of the commodity of the selected commodity type out of an enormous number of commodities sold in the store. Note that, if an effective period of a specific commodity is changed, it is desirable to perform the change after only the pertinent commodity is displayed as shown in the view V3. That is, for example, compared with when the view V1a is scrolled to search of the pertinent commodity, time for searching for a commodity is saved. Therefore, it is possible to perform the change operation for the effective period in a shorter time.

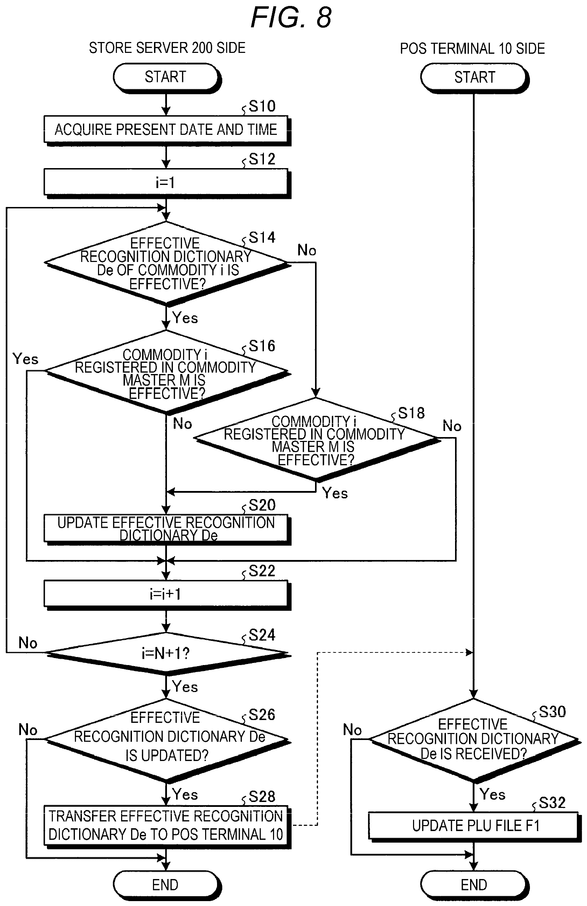

A flow of processing performed at a store opening time by the article reading system 1 is now explained with reference to FIG. 8. FIG. 8 is a flowchart showing the flow of the processing performed at the store opening time. Note that it is assumed that serial numbers 1 to N are given to commodities (a total number N) . It is assumed that effective periods and ineffective periods are set in advance for all commodities set as targets of the object recognition among the commodities registered in the commodity master M. Further, it is assumed that effective commodities (commodities displayed in the store) at the store opening time of the previous day are registered in the effective recognition dictionary De.

In the store server 200, the present-date-and-time acquiring section 92 acquires a present date and time (Act 10).

The effective-recognition-dictionary setting section 93 sets a variable I (which indicates the serial number of one of the commodities 1 to N) to 1 (Act 12).

The effective-recognition-dictionary setting section 93 determines whether the commodity i in the effective recognition dictionary De is effective at the present date (includes the present date in the effective period) (Act 14). If the commodity i in effective recognition dictionary De is effective at the present date (Yes in Act 14), the effective-recognition-dictionary setting section 93 proceeds to Act 16.

The effective-recognition-dictionary setting section 93 determines whether the commodity i registered in the commodity master M is effective at the present date (includes the present date in the effective period) (Act 16). If the commodity i is effective at the present date (Yes in Act 16), the effective-recognition-dictionary setting section 93 proceeds to Act 22.

The effective-recognition-dictionary setting section 93 increments the variable i by one (Act 22).

The effective-recognition-dictionary setting section 93 determines, on the basis of a value of the variable I, whether all the commodities i are checked (Act 24). Note that, when the total number of commodities is N, that is if i=N+1, the effective-recognition-dictionary setting section 93 determines that all the commodities are checked. If all the commodities are checked (Yes in Act 24), the effective-recognition-dictionary setting section 93 proceeds to Act 26.

The effective-recognition-dictionary setting section 93 determines whether the effective recognition dictionary De is updated (Act 26). If the effective recognition dictionary De is updated (Yes in Act 26), the effective-recognition-dictionary setting section 93 proceeds to Act 28.

The file transfer section 95 transfers the updated effective recognition dictionary De to the POS terminal 10 (Act 28). Thereafter, the store server 200 ends the processing shown in FIG. 8.

If the commodity i in the effective recognition dictionary De is not effective at the present date in Act 14 (No in Act 14), the effective-recognition-dictionary setting section 93 proceeds to Act 18.

The effective-recognition-dictionary setting section 93 determines whether the commodity i registered in the commodity master M is effective at the present date (Act 18). If the commodity i is effective at the present date (Yes in Act 18), the effective-recognition-dictionary setting section 93 proceeds to Act 20.

The effective-recognition-dictionary setting section 93 updates the effective recognition dictionary De (Act 20). Thereafter, the effective-recognition-dictionary setting section 93 proceeds to Act 22. The processing then proceeds as explained above.

If the commodity i is not effective at the present date and time in Act 16 (No in Act 16), the effective-recognition-dictionary setting section 93 proceeds to Act 20. The processing then proceeds as explained above.

If the commodity i is not effective at the present date in Act 18 (No in Act 18), the effective-recognition-dictionary setting section 93 proceeds to Act 22. The processing then proceeds as explained above.

If all the commodities i are not checked in Act 24 (No in Act 24), that is, i#N+1, the effective-recognition-dictionary setting section 93 returns to Act 14. The processing then proceeds as explained above.

If the effective recognition dictionary De is not updated in Act 26 (No in Act 26), the store server 200 ends the processing shown in FIG. 8.

On the other hand, in the POS terminal 10, the file updating section 84 confirms whether the effective recognition dictionary De is received from the store server 200 (Act 30). If receiving the effective recognition dictionary De from the store server 200 (Yes in Act 30), the file updating section 84 proceeds to Act 32.

The file updating section 84 updates the PLU file F1 (Act 32). Thereafter, the POS terminal 10 ends the processing shown in FIG. 8.

Note that, if the effective recognition dictionary De is not received from the store server 200 in Act 30 (No in Act 30), the POS terminal 10 ends the processing shown in FIG. 8. Note that the non-reception of the effective recognition dictionary De from the store server 200 only need be determined, for example, by detecting so-called time out in which the effective recognition dictionary De is not received for a predetermined time.

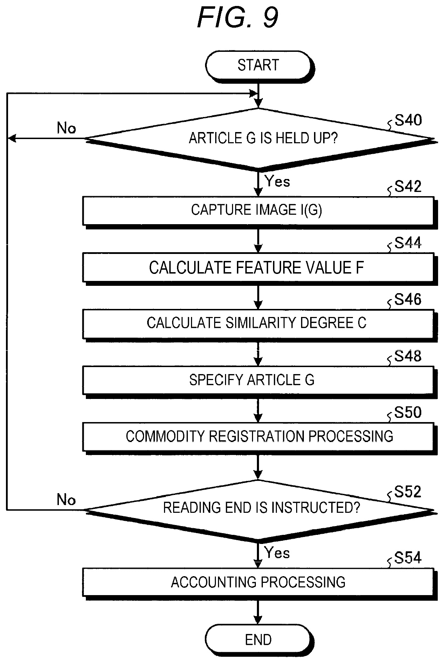

A flow of processing performed during checkout by the article reading system 1 is explained with reference to FIG. 9. FIG. 9 is a flowchart for explaining a flow of processing performed during checkout of a commodity purchased by the customer.

The detecting section 52 determines whether the article G is held over the reading window 103 (Act 40). If determining that the article G is held over the reading window 103 (Yes in Act 40), the detecting section 52 proceeds to Act 42.

The imaging section 51 captures the image I(G) of the article G (Act 42).

The feature-value calculating section 53 calculates the feature value F from the image I(G) (Act 44). Note that the feature-value calculating section 53 calculates an amount of the feature value F registered in the PLU file F1.

The similarity-degree calculating section 82 of the POS terminal 10 calculates the similarity degree C (Act 46).

The recognizing section 83 identifies the article G (Act 48) .

The CPU 61 of the POS terminal 10 performs commodity registration processing for registering the identified article G as a purchased commodity (Act 50).

The CPU 61 determines whether an end of reading the article G is instructed (Act 52). If the end of reading the article G is instructed (Yes in Act 52), the CPU 61 proceeds to Act 54.

The CPU 61 performs, on the read article G, accounting processing for performing a payment procedure by cash, a prepaid card, a credit card, or the like (Act 54). Therefore, the POS terminal 10 ends the processing shown in FIG. 9.

If the detecting section 52 does not determine in Act 40 that the article G is held over the reading window 103 (NO in Act 40), the detecting section 52 repeats Act 40. Note that, if the article G is not held over the reading window 103 for a predetermined time, the POS terminal 10 may end the processing shown in FIG. 9.

If the end of reading the article G is not instructed in Act 52 (No in Act 52), the CPU 61 returns to Act 40. The processing then proceeds as explained above.

As explained above, in the store server 200, which is an example of the object recognition system according to the embodiment, the effective-recognition-dictionary setting section 93 sets, as the effective recognition dictionary De, on the basis of the present date acquired by the present-date-and-time acquiring section 92 (the acquiring section) and the effective period or the ineffective period set for each of the articles G by the effective-period setting section 91 (the period setting section), each article G including the present date in the corresponding effective period out of the recognition dictionary Do. Therefore, if it is necessary to replace a recognition target commodity in each of the seasons, it is unnecessary to manually change the recognition target commodity every time. Therefore, efficiency of a job is improved. It is possible to prevent the setting from being forgotten.

In the store server 200 according to the embodiment, the effective-period setting section 91 (the period setting section) sets, for each of the articles G, the effective period start date f24 and the effective period end date f25 of the recognition dictionary Do. Therefore, it is possible to easily and surely set an effective period or an ineffective period using an existing tool such as a Gantt chart creation tool.

In the store server 200 according to the embodiment, the effective-period setting section 91 (the period setting section) sets the effective periods of the recognition dictionary Do to overlap one another in the plurality of articles G. Therefore, even if a replacement date of the article G fluctuates, it is possible to recognize commodities displayed in the store.

Further, in the store server 200 according to the embodiment, the effective-recognition-dictionary-setting section 93 compares the present date and the effective period or the ineffective period of the article G at the predetermined timing and updates the effective recognition dictionary De on the basis of the effective period or the ineffective period to which the present date belongs. Therefore, it is possible to easily and accurately update the effective recognition dictionary De.

In the store server 200 according to the embodiment, the specific-period display section 94 (the display section) displays, over the specific period range, the effective period or the ineffective period of the effective recognition dictionary De set by the effective-period setting section 91. Therefore, the operator of the store server 200 can quickly check commodities displayed in the store in a necessary period range.

The embodiment is explained above. However, the embodiment is presented as an example and is not intended to limit the scope of the invention. The new embodiment can be implemented in other various forms. Various omissions, replacements, and changes of the embodiment can be performed without departing from the spirit of the invention. The embodiment and modifications of the embodiment are included in the scope and the gist of the invention and included in the inventions described in claims and the scope of equivalents of the inventions.

For example, in Act 28 in FIG. 8, the file transfer section 95 is explained as transferring the updated effective recognition dictionary De to the POS terminal 10. However, the file transfer section 95 may transfer only changed information, that is, information changed from effective to ineffective or information changed from ineffective to effective in the effective recognition dictionary De. The file updating section 84 of the POS terminal 10, which receives the transferred information, only has to update the PLU file F1 according to content of the received information.

In the embodiment, the effective-recognition-dictionary setting section 93 is explained as setting the effective recognition dictionary De. However, the effective-recognition-dictionary setting section 93 may be configured to give an effective or ineffective flag indicating whether the articles G (the commodities) are effective or ineffective to the recognition dictionary Do. The file transfer section 95 is configured to transfer content of the recognition dictionary Do, to which the flag is given, to the POS terminal 10. By setting only the article G, to which the effective flag is given, as a target of the object recognition, it is possible to realize the same action as the action in the embodiment. In this case, the recognition dictionary Do, to which the effective flag is given, functions as the effective recognition dictionary De.

For example, in the embodiment explained above, the reading unit 100 is explained as including the feature-value calculating section 53. However, the feature-value calculating section 53 may be included in the POS terminal 10. That is, the reading unit 100 may transmit an image captured by the camera 160 to the POS terminal 10. The POS terminal 10 may calculate the feature value F from the received image.

## Claims

1. A server for use in an object recognition system that includes the server and at least one point of sale device, the server comprising:
a storage device that stores a recognition dictionary that includes, for each of a plurality of articles sold in a store, at least one feature value for identifying the corresponding article, and an effective period indicating a period during which the corresponding article is sold;
a processor configured to:
acquire a present date,
for each of the plurality of articles sold in the store, determine whether the present date is included in the effective period of the corresponding article, and
generate an effective recognition dictionary that includes the at least one feature value of each of the plurality of articles sold in the store for which the present date is included in the corresponding effective period; and
a communication device controlled to transmit, at a predetermined time, the effective recognition dictionary to the at least one point of sale device.

2. The server according to claim 1, wherein the processor is further configured to:
receive an effective period input setting, for each of the articles, a start date and an end date of the effective period, and
control the storage device to update the recognition dictionary when the effective period input is received.

3. The server according to claim 2, further comprising:
a display device, wherein
the processor is further configured to:
receive a specified period range input, and
control the display device to display, over a specific period range indicated by the specified period range input:
each of the plurality of articles sold in the store, and
information indicating whether the corresponding effective period is included in the specified period range.

4. The server according to claim 2, further comprising:
a display device, wherein
the recognition dictionary includes, for each of the plurality of articles sold in the store, a commodity category of the corresponding article, and
the processor is further configured to:
receive a commodity category input, and
control the display device to display:
each of the plurality of articles sold in the store that have a commodity category corresponding to the commodity category input, and
information indicating the effective period for each displayed article.

5. The server according to any of claims 1 to 4, wherein the effective periods included in the recognition dictionary overlap one another with respect to articles of a same group.

6. The server according to any of claims 1 to 5, wherein
the storage unit stores the effective recognition dictionary, and
the processor generates the effective recognition dictionary by controlling the storage unit to update the effective recognition dictionary as needed based on the present date.

7. The server according to claim 6, wherein
the processor controls the communication device to transmit, to the at least one point of sale device, only portions of the effective recognition dictionary that were updated based on the present date.

8. An object recognition method comprising:
storing a recognition dictionary that includes, for each of a plurality of articles sold in a store, at least one feature value for identifying the corresponding article, and an effective period indicating a period during which the corresponding article is sold;
acquiring a present date;
for each of the plurality of articles sold in the store, determining whether the present date is included in the effective period of the corresponding article;
storing an effective recognition dictionary that includes the at least one feature value of each of the plurality of articles sold in the store for which the present date is included in the corresponding effective period;
generating an image of an article; and
recognizing the article by comparing at least one feature value in the generated image to the at least one feature value of each of the plurality of articles stored in the effective recognition dictionary.

9. The method according to claim 8, further comprising:
receiving an effective period input setting, for each of the articles, a start date and an end date of the effective period; and
updating the recognition dictionary when the effective period input is received.

10. The method according to claim 9, further comprising:
receiving a specified period range input; and
controlling a display device to display, over a specific period range indicated by the specified period range input:
each of the plurality of articles sold in the store, and
information indicating whether the corresponding effective period is included in the specified period range.

11. The method according to claim 9, wherein the recognition dictionary includes, for each of the plurality of articles sold in the store, a commodity category of the corresponding article, the method further comprising:
receiving a commodity category input; and
controlling a display device to display:
each of the plurality of articles sold in the store that have a commodity category corresponding to the commodity category input, and
information indicating the effective period for each displayed article.

12. An object recognition system comprising:
a server including:
a storage device that stores a recognition dictionary that includes, for each of a plurality of articles sold in a store, at least one feature value for identifying the corresponding article, and an effective period indicating a period during which the corresponding article is sold,
a first processor configured to:
acquire a present date,
for each of the plurality of articles sold in the store, determine whether the present date is included in the effective period of the corresponding article, and
generate an effective recognition dictionary that includes the at least one feature value of each of the plurality of articles sold in the store for which the present date is included in the corresponding effective period; and
at least one point of sale device including:
a communication device controlled to receive from the server at a predetermined time, the effective recognition dictionary,
a camera configured to generating an image of an article, and
a second processor configured to recognize the article by comparing at least one feature value in the generated image to the at least one feature value of each of the plurality of articles in the received effective recognition dictionary.

13. The system according to claim 12, wherein the first processor is further configured to:
receive an effective period input setting, for each of the articles, a start date and an end date of the effective period, and
control the storage device to update the recognition dictionary when the effective period input is received.

14. The system according to claim 13, further comprising:
a display device, wherein
the first processor is further configured to:
receive a specified period range input, and
control the display device to display, over a specific period range indicated by the specified period range input:
each of the plurality of articles sold in the store, and
information indicating whether the corresponding effective period is included in the specified period range.

15. The system according to claim 13, further comprising:
a display device, wherein
the recognition dictionary includes, for each of the plurality of articles sold in the store, a commodity category of the corresponding article, and
the first processor is further configured to:
receive a commodity category input, and
control the display device to display:
each of the plurality of articles sold in the store that have a commodity category corresponding to the commodity category input, and
information indicating the effective period for each displayed article.
